# EUROPEAN PATENT APPLICATION

(11) **EP 2 175 364 A1**
(43) Date of publication of application: **14.04.2010**
(21) Application number: 08777445.1
(22) Date of filing: 20.06.2008
(51) Int. Cl.: G06F 9/445

(54) **REMOTE MANAGEMENT DEVICE AND REMOTE MANAGEMENT SYSTEM**

(30) Priority: 25.06.2007 JP 2007165883
(71) Applicant: Daikin Industries, Ltd., Osaka 530-8323 (JP)
(72) Inventor: HOGA, Shozo, Kusatsu-shi Shiga 525-8526 (JP); FUKUSHIGE, Yasunori, Kusatsu-shi Shiga 525-8526 (JP)
(74) Representative: Goddar, Heinz J.
(86) International application number: PCT/JP2008/061301
(87) International publication number: WO 2009/001761

(57) **Abstract**

A remote management server (20) stores plural program modules each of which is to be executed in at least any of plural controllers (10a, 10b, ...). An operator defines a group including one or more of the program modules via a group search screen (D1), a group definition screen (D2) and a program module setting screen (D3). Next, the operator correlates the defined group with the controller(s) (10a, 10b, ...) via a by-controller program module registration screen (D5). Thus, the program modules required in each controller (10a, 10b, ...) are easily registered in the remote management server (20).

## Description

### TECHNICAL FIELD

The present invention relates to a remote management device that manages, remotely of plural controllers that respectively control devices, the plural controllers and to a remote management system that is equipped with the remote management device.

### BACKGROUND ART

Conventionally, a remote management service that centrally manages devices such as air conditioning apparatus and disaster prevention devices inside buildings scattered in various locations is implemented by a remote management device installed in a remote management center. Additionally, sometimes a program delivery service is implemented as part of this kind of remote management service (e.g., patent documents 1 to 4). The program delivery service here is a service that delivers program modules that are to be executed in controllers that control the devices to those controllers from the remote management device via a communication line. This kind of program delivery service makes modification of the program modules required in the controllers easy.

Incidentally, the remote management device manages numerous controllers disposed inside buildings in various locations. Additionally, each controller requires a different program module depending on the configuration of the devices that that controller controls and the situation of a user of that controller. Consequently, the remote management device needs to have information relating to which controller requires which program module in order to efficiently implement delivery of the program modules. Thus, at present, operation is carried out where a manager manually designates the required program modules one by one with respect to the remote management device.
Patent Document 1: JP-A No. 2007-078221
Patent Document 2: JP-A No. 2006-244269
Patent Document 3: JP-A No. 2006-244164
Patent Document 4: JP-A No. 2006-209469

### DISCLOSURE OF THE INVENTION

### <Technical Problem>

However, the work of designating the program modules required in each controller one by one as mentioned above is cumbersome for the manager who performs that work. Further, in recent years, as devices have become more diverse and more sophisticated, the number of program modules required in each controller has also increased and the frequency with which the program modules need to be updated is growing. Moreover, there is a tendency for the number of controllers introducing the program delivery service to also increase. Consequently, it is expected that the burden on the manager will continue to increase more and more in the future; therefore, circumstances may also arise where, due to an input mistake or the like, an unwanted service resulting from the wrong program module ends up being provided to the user.

An object of the present invention is to provide a remote management device that is capable of easily registering one or more program required in each controller and a remote management system that is equipped with the remote management device.

### <Solution to the Problem>

A remote management device pertaining to a first aspect of the present invention comprises a program storage unit, a group definition information registration unit, a first management information registration unit and a communication unit and manages plural controllers remotely of the plural controllers. The plural controllers respectively control devices. The program storage unit stores plural programs that are to be executed in the plural controllers. The group definition information registration unit receives registration of group definition information. The group definition information defines a group whose element is one or more programs of the plural programs. The first management information registration unit receives registration of first management information. The first management information correlates at least one of the plural controllers and the group. The communication unit transmits the programs that are to be executed in the controllers to the corresponding controllers.

This remote management device stores the plural programs each of which is to be executed in at least any of the plural controllers. Additionally, this remote management device receives registration of the program(s) to be executed in each controller and provides the program(s) following the contents of that registration to each controller. This registration of the programs in the remote management device is performed by defining a group including one or more programs and correlating the defined group with the controller(s). Thus, in this remote management device, the program(s) required in each controller can be registered easily.

A remote management device pertaining to a second aspect of the present invention is the remote management device pertaining to the first aspect of the present invention, wherein the group definition information registration unit receives registration of plural sets of the group definition information including first group definition information and second group definition information. The first group definition information defines a first group. The first group is a group whose element is one or more programs of the plural programs. The second group definition information defines a second group. The second group is a group that differs from the first group and whose element is one or more programs of the plural programs.

In this remote management device, it is possible to define plural groups of programs. Thus, the program(s) required in each controller can be registered more easily.

A remote management device pertaining to a third aspect of the present invention is the remote management device pertaining to the second aspect of the present invention, wherein the group definition information registration unit displays the first group definition information, receives input of a change with respect to the first group definition information that has been displayed, and registers, as the second group definition information, information where the change that has been inputted is reflected in the first group definition information.

In this remote management device, it is possible to define a new group of programs (the second group) on the basis of an existing group of programs (the first group). In other words, when an operator defines a new group of programs, it suffices for the operator to input only the difference between the new group and the existing group. Thus, a group of programs can be defined easily. In particular, when a new group can be defined by just making a slight change to an existing group, defining the group becomes easier.

A remote management device pertaining to a fourth aspect of the present invention is the remote management device pertaining to the second aspect or the third aspect of the present invention, further comprising a registration changing unit. The registration changing unit collectively displays all or a part of the controllers correlated by the first management information with the first group, receives selection of all or a part of the controllers that have been collectively displayed, and changes the first management information so as to correlate the controllers that have been selected with the second group.

In this remote management device, the operator can, with respect to all or a part of the controllers correlated with a certain group (the first group), collectively eliminate the corresponding relationship with that group (the first group) and correlate another group (the second group). That is, when it is necessary to recorrelate, with a new group, all or a part of the controllers correlated with a certain group, even when plural controllers pertaining to that change exist, it is not necessary to make individual registration changes with respect to those plural controllers. Consequently, when a registration change of the same contents becomes necessary in plural controllers correlated with the same group, work by the operator to make that change becomes easy.

It will be noted that, when new models of devices are developed and introduced or there arises the need to modify the programs that are to be executed in the devices, it is easy for the demand to want to collectively change all or a part of the controllers correlated with a specific group to arise. The fourth aspect of the present invention exhibits that effect particularly in this kind of situation.

A remote management device pertaining to a fifth aspect of the present invention is the remote management device pertaining to any of the first aspect to the fourth aspect of the present invention, further comprising a second management information registration unit. The second management information registration unit receives registration of second management information. The second management information correlates the controllers and the programs.

In this remote management device, the programs can be correlated directly with the controllers without using the group. Thus, the program(s) can be registered in consideration of circumstances per controller.

A remote management device pertaining to a sixth aspect of the present invention is the remote management device pertaining to any of the first aspect to the fifth aspect of the present invention, wherein the group definition information is information that correlates program identification information and group identification information. The program identification information identifies the programs belonging to the group. The group identification information identifies the group.

In this remote management device, the program bodies are not included in the group definition information itself. That is, the program bodies can be consolidated in the program storage unit. Consequently, even when plural groups whose element is the same program are defined, it is not necessary to store the same program in separate storage regions. Thus, storage regions can be utilized efficiently.

A remote management device pertaining to a seventh aspect of the present invention is the remote management device pertaining to any of the first aspect to the sixth aspect of the present invention, wherein the communication unit transmits, to each of the controllers, together with a program group that includes the program to be executed in that controller, the group definition information that defines the group correlated by the first management information with that controller.

This remote management device provides, to each controller, a program group that includes the program(s) to be executed in that controller and the group definition information of the group correlated with that controller. Thus, each controller can recognize and execute the program(s) correlated with that controller.

A remote management device pertaining to an eighth aspect of the present invention is the remote management device pertaining to any of the first aspect to the sixth aspect of the present invention, further comprising a specifying unit. The specifying unit references the first management information and the group definition information and specifies the program to be executed in each of the controllers from among the plural programs. The communication unit transmits, to each of controllers, only the program of the plural programs that has been specified by the specifying unit.

This remote management device provides, to each controller, only the program(s) to be executed in that controllers. Thus, the communication burden between this remote management device and the controllers is controlled without extra programs being transmitted.

A remote management device pertaining to a ninth aspect of the present invention is the remote management device pertaining to any of the first aspect to the eighth aspect of the present invention, wherein the controllers are built into the devices.

In this remote management device, the program(s) required in each device can be registered easily.

A remote management system pertaining to a tenth aspect of the present invention comprises plural controllers and a remote management device. The plural controllers respectively control devices. The remote management device manages the plural controllers remotely of the plural controllers. The remote management device includes a program storage unit, a group definition information registration unit, a first management information registration unit and a remote side communication unit. The program storage unit stores plural programs that are to be executed in the plural controllers. The group definition information registration unit receives registration of group definition information. The group definition information defines a group whose element is one or more programs of the plural programs. The first management information registration unit receives registration of first management information. The first management information correlates at least one of the plural controllers and the group. The remote side communication unit transmits the programs that are to be executed in the controllers to the corresponding controllers. The controllers include controller side communication units and program execution units. The controller side communication units receive the programs that have been transmitted from the remote side communication unit. The program execution units execute the programs that have been received by the controller side communication units.

In this remote management system, the remote management device stores the plural programs each of which is to be executed in at least any of the plural controllers. Additionally, this remote management device receives registration of the program(s) to be executed in each controller and provides the program(s) following the contents of that registration to each controller. This registration of the programs in the remote management device is performed by defining a group including one or more programs and correlating the defined group with the controller(s). Thus, the program(s) required in each controller can be registered easily in the remote management device.

### <Advantageous Effects of the Invention>

In the remote management device pertaining to the first aspect of the present invention, the program(s) required in each controller can be registered easily.

In the remote management device pertaining to the second aspect of the present invention, the program(s) required in each controller can be registered more easily.

In the remote management device pertaining to the third aspect of the present invention, a group of programs can be defined easily. In particular, when a new group can be defined by just making a slight change to an existing group, defining the group becomes easier.

In the remote management device pertaining to the fourth aspect of the present invention, when a registration change of the same contents becomes necessary in plural controllers correlated with the same group, work by the operator to make that change becomes easy. It will be noted that, when new models of devices are developed and introduced or there arises the need to modify the programs that are to be executed in the devices, it is easy for the demand to want to collectively change all or a part of the controllers correlated with a specific group to arise. The fourth aspect of the present invention exhibits that effect particularly in this kind of situation.

In the remote management device pertaining to the fifth aspect of the present invention, the program(s) can be registered in consideration of circumstances per controller.

In the remote management device pertaining to the sixth aspect of the present invention, storage regions can be utilized efficiently.

In the remote management device pertaining to the seventh aspect of the present invention, each controller can recognize and execute the program(s) correlated with that controller.

In the remote management device pertaining to the eighth aspect of the present invention, the communication burden between this remote management device and the controllers is controlled without extra programs being transmitted.

In the remote management device pertaining to the ninth aspect of the present invention, the program(s) required in each device can be registered easily.

In the remote management system pertaining to the tenth aspect of the present invention, the program(s) required in each controller can be registered easily in the remote management device.

### BRIEF DESCRIPTION OF THE DRAWINGS

FIG 1 is a configural diagram of a remote management system pertaining to an embodiment of the present invention.
FIG 2 is a configural diagram of a building.
FIG 3 is a configural diagram of air conditioning apparatus.
FIG. 4 is a configural diagram of a controller.
FIG 5 is a configural diagram of a remote management server.
FIG. 6 is a diagram showing a directory structure of a program module database.
FIG 7 is a diagram showing a data structure of a group listing table.
FIG 8 is a diagram showing a data structure of a group definition table.
FIG 9 is a diagram showing a data structure of a by-controller group registration table.
FIG. 10 is a diagram showing a data structure of a by-controller program module registration table.
FIG 11 is a diagram showing a group search screen.
FIG. 12 is a diagram showing a group definition screen.
FIG 13 is a diagram showing a program module setting screen.
FIG. 14 is a diagram showing a collective group changing screen.
FIG 15 is a diagram showing a by-controller program module registration screen.
FIG 16 is a diagram showing configuration information of air conditioning apparatus managed by a certain controller.
FIG 17 is a diagram showing names and the like of program modules correlated with a certain controller.

### EXPLANATION OF THE REFERENCE SIGNS

- 1a, 1b, ...: Buildings
- 2: Remote Management Center
- 10a, 10b, ...: Controllers
- 11: Control Unit (Program Execution Unit)
- 13: Internet Communication Unit (Controller Side Communication Unit)
- 20: Remote Management Server (Remote Management Device)
- 21: Control Unit
- 22: Storage Unit
- 22a: Program Module Database (Program Storage Unit)
- 22c: Group Definition Table
- 22d: By-Controller Group Registration Table
- 22e: By-Controller Program Module Registration Table
- 23: Internet Communication Unit (Communication Unit, Remote Side Communication Unit)
- 40a, 40b, ...: Air Conditioning Systems (Devices)
- 100: Remote Management System
- D1: Group Search Screen
- D2: Group Definition Screen
- D3: Program Module Setting Screen
- D4: Collective group changing screen
- D5: By-Controller Program Module Registration Screen

### BEST MODE FOR CARRYING OUT THE INVENTION

A remote management system 100 that includes a remote management server (remote management device) 20 pertaining to an embodiment of the present invention will be described below with reference to the drawings.

### Overall Configuration

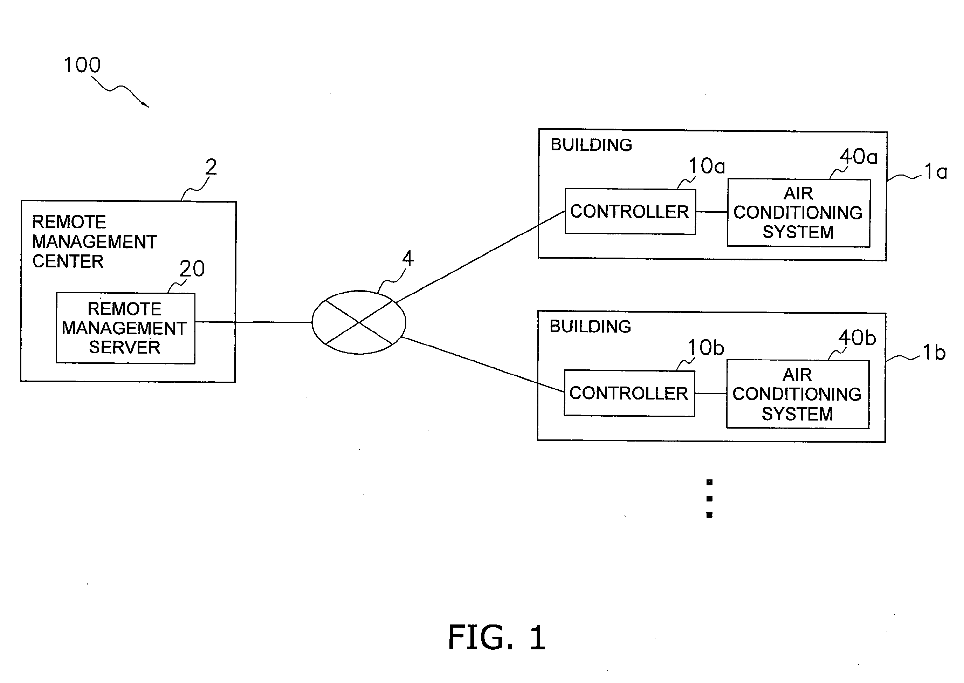

The remote management system 100 is a system for managing, in a remote management center 2, plural air conditioning systems 40a, 40b, ... respectively installed inside plural buildings 1a, 1b, .... The remote management system 100 is, as shown in FIG 1, mainly configured from the air conditioning systems 40a, 40b, ..., controllers 10a, 10b, ... and a remote management server 20. The buildings 1a, 1b, ... exist in various locations. The controllers 10a, 10b, ... are respectively installed inside the buildings 1a, 1b, ... and respectively manage the air conditioning systems 40a, 40b, .... The remote management server 20 is installed inside the remote management center 2, which exists in a location remote from the buildings 1a, 1b, ..., and is connected to the controllers 10a, 10b, ... via an Internet line 4.

### Configuration of Buildings

The air conditioning systems 40a, 40b, ... are respectively installed inside the buildings 1a, 1b, .... The configuration of the building 1a will be described below, but the same will also hold true in regard to the other buildings 1b, ....

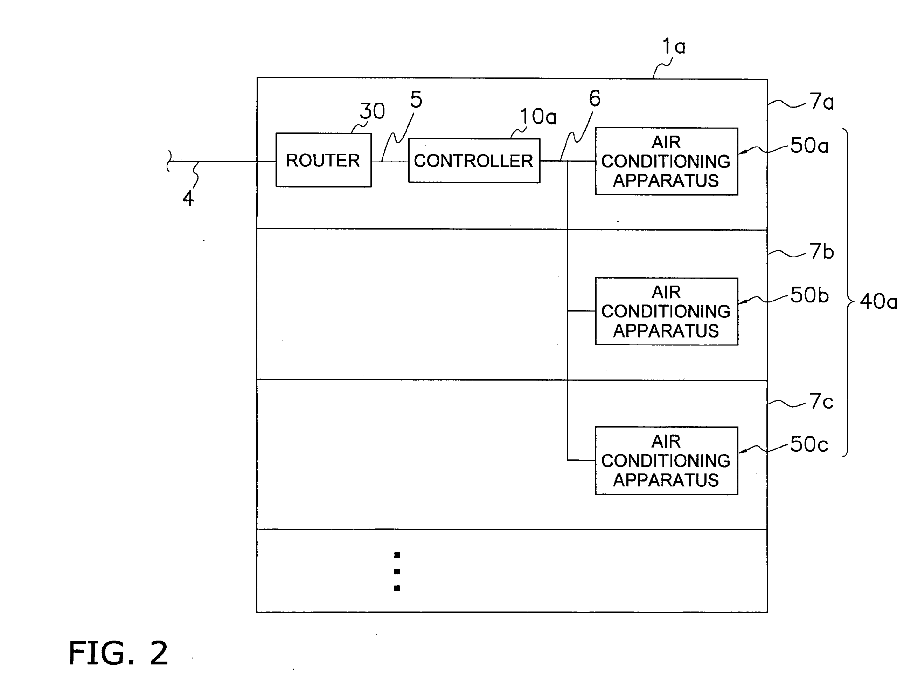

As shown in FIG. 2, the building 1a is, for example, an office building and is divided into plural zones 7a, 7b, 7c, .... Air conditioning apparatus 50a, 50b, 50c, ... that are included in the air conditioning system 40a are respectively installed in the zones 7a, 7b, 7c,

The zone 7a is a management office that is used by a building management company that manages the entire building 1 a, and there are tenants in the remaining zones 7b, 7c, .... In the zone 7a that is a management office, there are installed the controller 10a that manages the air conditioning apparatus 50a, 50b, 50c, ... and a router 30 that connects a local area network (hereinafter, LAN) 5 in which the controller 10a exists to the Internet line 4. The router 30 has a firewall function and blocks access to the controller 10a inside the LAN 5 from a device outside the LAN 5. It will be noted that this does not apply to a reply to an inquiry to a device outside the LAN 5 from the controller 10a.

### Configuration of Air Conditioning Apparatus

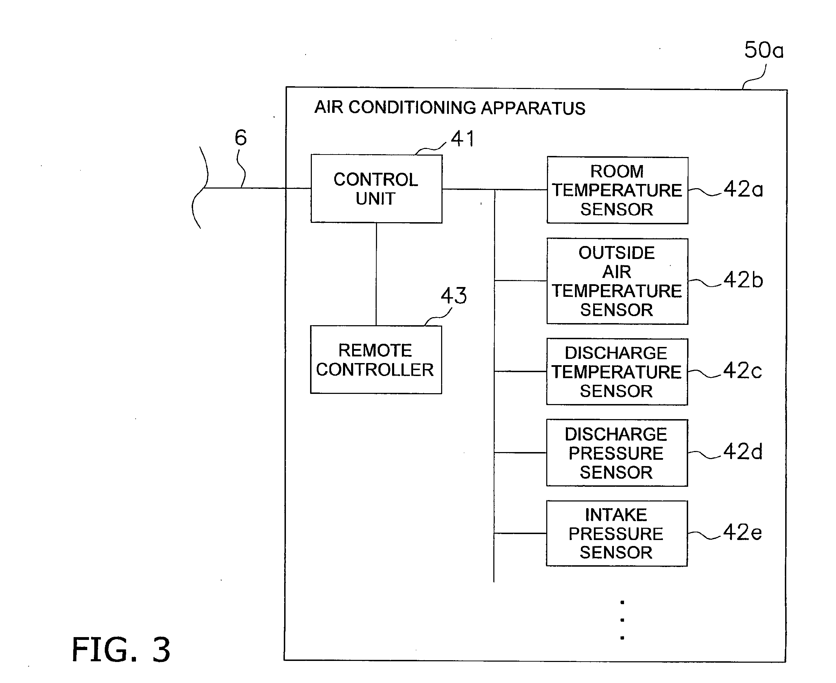

The configuration of the air conditioning apparatus 50a will be described below with reference to FIG 3, but the same will also hold true in regard to the other air conditioning apparatus 50b, 50c, ....

The air conditioning apparatus 50a that air-conditions the inside of the zone 7a of the building 1a has a refrigerant circuit that is configured from a compressor, a heat exchanger and the like that are not shown. Further, various sensors 42a, 42b, 42c, 42d, 42e, ... are attached to the air conditioning apparatus 50a. The sensor 42a detects the temperature of the room in which the air conditioning apparatus 50a is installed. The sensor 42b detects the temperature of the outside air near the building 1a in which the air conditioning apparatus 50a is installed. The sensor 42c detects a discharge temperature that is the temperature of refrigerant in a discharge pipe of the compressor (not shown) included in the air conditioning apparatus 50a. The sensor 42d detects a discharge pressure that is the pressure of the refrigerant in the discharge pipe in the compressor (not shown) included in the air conditioning apparatus 50a. The sensor 42e detects an intake pressure that is the pressure of the refrigerant in an intake pipe of the compressor (not shown) included in the air conditioning apparatus 50a.

Further, the air conditioning apparatus 50a has a control unit 41. The control unit 41 controls the operation of the air conditioning apparatus 50a -- that is, the operation of each part such as the compressor included in the refrigerant circuit -- in accordance with control commands that have been inputted from a manager of the building 1a via the controller 10a or control commands that have been inputted from a general user inside the zone 7a via a remote controller 43.

Further, the control unit 41 transmits device data relating to the air conditioning apparatus 50a to the controller 10a. For example, the control unit 41 transmits, to the controller 10a at predetermined intervals (in the present embodiment, 1 minute), values that have been detected in the various sensors 42a, 42b, 42c, 42d, 42e, ... that are connected to the control unit 41. Further, when a control command is inputted via the remote controller 43, the control unit 41 immediately transmits that inputted control command to the controller 10a.

### Configuration of Controllers

The configuration of the controller 10a will be described below, but the same will also hold true in regard to the other controllers 10b, ....

The controller 10a is installed in the management office 7a inside the building 1 a and manages, via an air conditioning network 6 for internally communicating with the air conditioning apparatus 50a, 50b, 50c, ..., the plural air conditioning apparatus 50a, 50b, 50c, ... that are similarly installed inside the building 1a. Specifically, the controller 10a detects an abnormality in the air conditioning apparatus 50a, 50b, 50c, ..., receives input of operating schedules of the air conditioning apparatus 50a, 50b, 50c, ... and controls the operation of the air conditioning apparatus 50a, 50b, 50c, ... in accordance with those operating schedules. Further, the controller 10a is connected to the Internet line 4 via the router 30 and is further connected to the remote management server 20 inside the remote management center 2 via the Internet line 4.

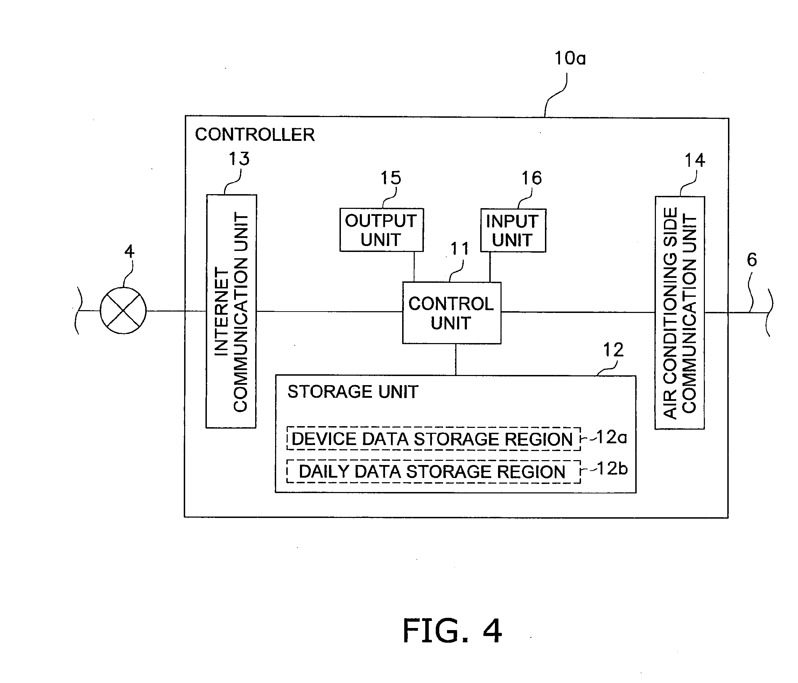

As shown in FIG 4, the controller 10a is mainly configured from a control unit 11, a storage unit 12, an Internet communication unit 13, an air conditioning side communication unit 14, an output unit 15 and an input unit 16.

The Internet communication unit 13 enables connection of the controller 10a to the Internet line 4. The air conditioning side communication unit 14 enables connection of the controller 10a to the air conditioning network 6.

In the storage unit 12, there are ensured a device data storage region 12a and a daily data storage region 12b.

In the device data storage region 12a, there are stored device data relating to the air conditioning apparatus 50a, 50b, 50c, ... collected by the air conditioning side communication unit 14. The device data storage region 12a has only a storage capacity to the extent that it is capable of storing a predetermined time period's worth (in the present embodiment, 30 minutes) of the device data, and each time new device data are acquired, the oldest device data are sequentially erased.

In the daily data storage region 12b, there are stored original data of daily data that are transmitted once a day from the controller 10a to the remote management server 20. The daily data are data summarizing one day's worth of operating histories and operating statuses of the air conditioning apparatus 50a, 50b, 50c, ... and include maximum values and minimum values of the values that have been detected in the sensors 42a, 42b, 42c, 42d, 42e, ... on that one day and cumulative running times of the air conditioning apparatus 50a, 50b, 50c, ... in that one day. The original data of the daily data stored in the daily data storage region 12b are in-processing data before completion of the daily data that eventually are transmitted to the remote management server 20. The daily data are processed data on the basis of the device data stored in the device data storage region 12a in predetermined intervals (in the present embodiment, 30 minutes) and are transmitted to the remote management server 20 via the Internet communication unit 13 once a day at a predetermined time. Additionally, when transmission of the daily data to the remote management server 20 is completed, the daily data that have been transmitted are erased from the daily data storage region 12b. That is, the daily data storage region 12b is used in order to create new daily data of the next day.

The control unit 11 determines, in accordance with an abnormality detection program stored in the storage unit 12, whether or not there is an abnormality in the air conditioning apparatus 50a, 50b, 50c, ... on the basis of the device data that are stored in the device data storage region 12a at predetermined intervals (in the present embodiment, 5 minutes). It will be noted that the control unit 11 performs that abnormality detection processing in units of the air conditioning apparatus 50a, 50b, 50c, .... The abnormality detection program includes plural program modules. These program modules are downloaded from the remote management server 20 via the Internet line 4 and are stored in the storage units 12. Additionally, when the control unit 11 detects an abnormality, the control unit 11 creates abnormality alert data and immediately causes the Internet communication unit 13 to transmit the abnormality alert data to the remote management server 20. It will be noted that there exist two types of abnormalities that the control unit 11 detects with the abnormality detection program: "abnormal" and "predicted". Here, an abnormality classified as "abnormal" is a state where a device is failing, and an abnormality classified as "predicted" is a state where it is predicted that a device will soon fail even though it has not yet failed.

The output unit 15 and the input unit 16 are integrally configured as a display having a touch panel function and a speaker function. An input screen on which buttons and the like that receive input of control commands with respect to the air conditioning apparatus 50a, 50b, 50c, ... are arranged is displayed on that display, and when the manager touches one of those buttons, processing corresponding to that button is executed inside the controller 10a. For example, when a selection is made by the manager to turn ON the power of the air conditioning apparatus 50a, 50b, 50c, ... by operating a button on the display, a control command instructing the power of the air conditioning apparatus 50a, 50b, 50c, ... to be turned ON is transmitted to the control units 41 of the air conditioning apparatus 50a, 50b, 50c, ... via the air conditioning side communication units 14.

### Configuration of Remote Management Server

The remote management server 20 is installed inside the remote management center 2 and is connected to the controllers 10a, 10b, ... inside the buildings 1a, 1b, ... via the Internet line 4.

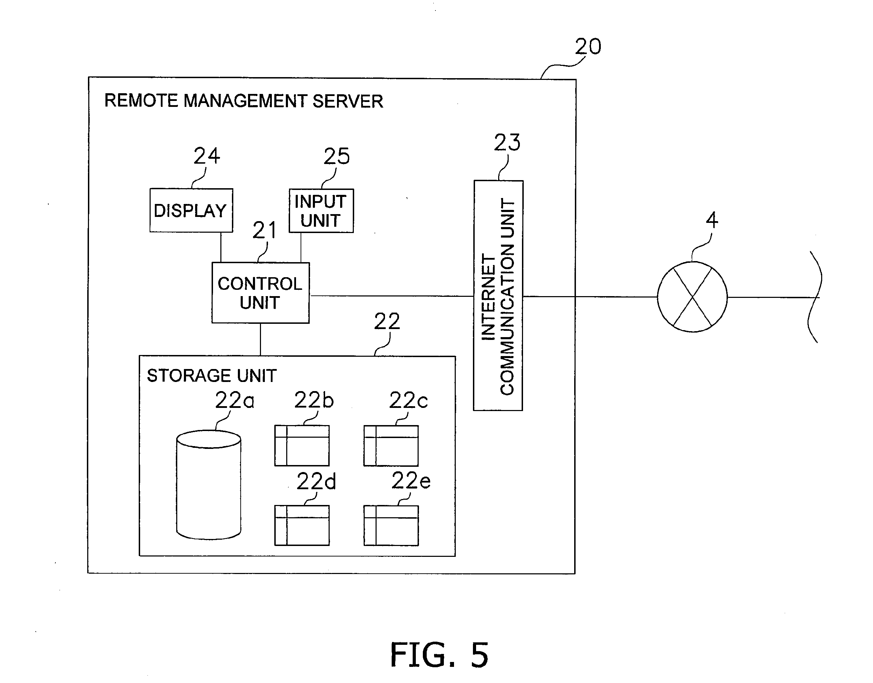

As shown in FIG. 5, the remote management server 20 is mainly configured from a control unit 21, a storage unit 22, an Internet communication unit 23, a display 24 and an input unit 25. It will be noted that the remote management server 20 is actually a computer group including plural computers and that these computers cooperate to configure the remote management server 20 as a whole.

The Internet communication unit 23 enables connection of the remote management server 20 to the Internet line 4, receives the abnormality alert data and the daily data sent from the controllers 10a, 10b, ... via the Internet line 4 and transmits the program modules to the controllers 10a, 10b, ....

In the storage unit 22, there are stored a database 22a and data tables 22b to 22e. The details of the database 22 and the data tables 22b to 22e will be described later.

The control unit 21 manages the air conditioning systems 40a, 40b, ... in the various locations on the basis of the abnormality alert data and the daily data that have been sent from the controllers 10a, 10b, .... For example, when an abnormality is detected in one of the air conditioning systems 40a, 40b, ..., the control unit 21 performs processing for dispatching a serviceman to that air conditioning system 40a, 40b, .... Further, the control unit 21 provides the program modules required by the controllers 10a, 10b, ... via the Internet line 4.

The display 24 displays later-described screens D1 to D5 and the like. The input unit 25 is configured from a mouse and a keyboard and receives various types of input from an operator.

### Database and Various Data Tables

The details of the database 22a and the data tables 22b to 22e stored in the storage unit 22 of the remote management server 20 will be described below.

### (1) Program Module Database

The program module database 22a is a storage region ensured inside the storage unit 22 of the remote management server 20 and is a database for storing the program modules each of which is executed in at least any of the controllers 10a, 10b, ... in the various locations.

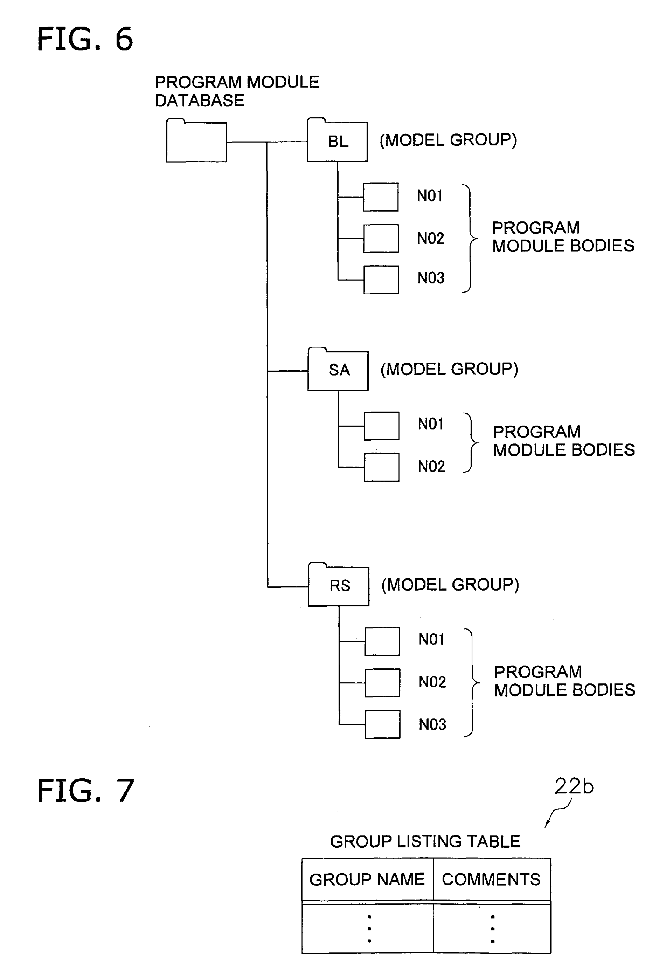

As shown in FIG. 6, inside the program module database 22a, there are disposed directories that correspond in one-to-one ratios to model groups. Inside each directory, there are stored program module bodies that can be executed in models belonging to the model group corresponding to that directory. Further, as the name of each directory, an ID of the model group corresponding to that directory is used.

It will be noted that the model groups are administrative groups for classifying the models of the air conditioning apparatus 50a, 50b, 50c, ... that are used by the manufacturer that provides the air conditioning apparatus 50a, 50b, 50c, ....

### (2) Group Listing Table

The group listing table 22b is a table for registering groups each of which includes one or more program modules. That is, the group listing table 22b is a list of groups that have been defined.

As shown in FIG. 7, in the group listing table 22b, there are defined the fields "Group Name" and "Comments". Each record corresponds to one group.

In the "Group Name" field of each record, there is stored the name of the group corresponding to that record. The names of the groups are information for uniquely identifying each group. In the "Comments" field of each record, there are stored comments for describing what kind of group the group corresponding to that record is.

### (3) Group Definition Table

The group definition table 22c is a table for registering information indicating which program modules each group is configured from.

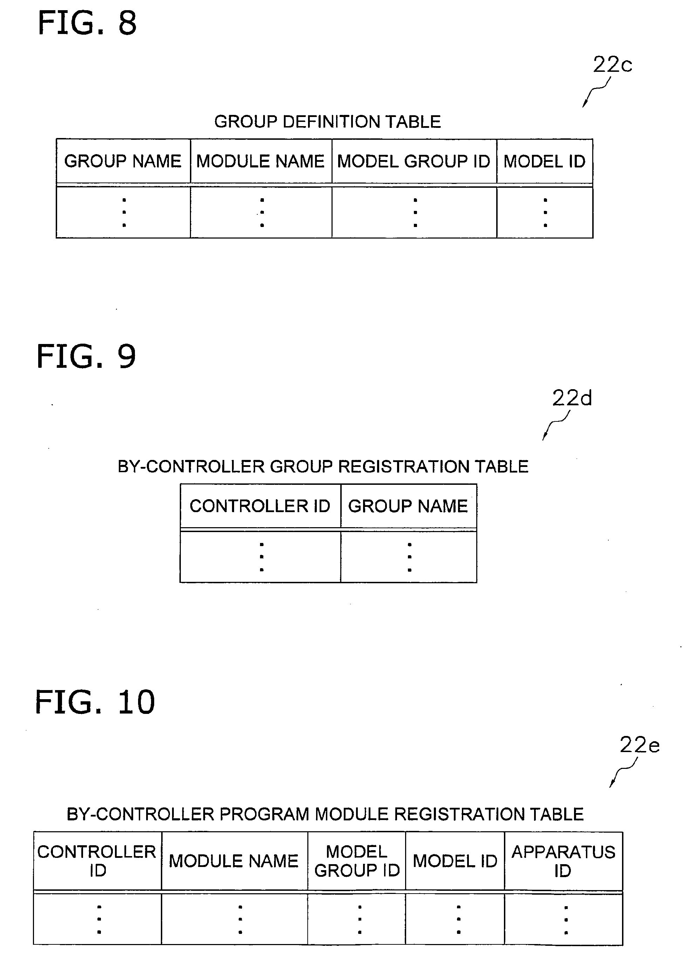

As shown in FIG. 8, in the group definition table 22c, there are defined the fields "Group Name", "Module Name", "Model Group ID" and "Model ID". Each record defines a corresponding relationship between one group and one program module and manages information indicating in which models of the air conditioning apparatus 50a, 50b, 50c, ... belonging to which model groups that program module is to be executed.

In the "Group Name" field of each record, there is stored the name of the group corresponding to that record. In the "Module Name" field of each record, there is stored the name of the program module corresponding to that record. In the "Model Group ID" field of each record, there is stored the ID of the model group corresponding to that record. In the "Model ID" field of each record, there is stored the ID of the model corresponding to that record. It will be noted that one program module is uniquely identified by combining the value of the "Model group ID" field and the value of the "Module Name" field of each record (see FIG 6).

### (4) By-Controller Group Registration Table

The by-controller group registration table 22d is a table for registering information that allocates the groups of the program modules to the controllers 10a, 10b, ... in the various locations.

As shown in FIG. 9, in the by-controller group registration table 22d, there are defined the fields "Controller ID" and "Group Name". Each record defines a corresponding relationship between one controller and one group.

In the "Controller ID" field of each record, there is stored the ID of the controller corresponding to that record. In the "Group Name" field of each record, there is stored the name of the group corresponding to that record.

### (5) By-Controller Program Module Registration Table

The by-controller program module registration table 22e is a table for registering information that allocates the program modules to the controllers 10a, 10b, ... in the various locations.

As shown in FIG. 10, in the by-controller program module registration table 22e, there are defined the fields "Controller ID", "Module Name", "Model Group ID", "Model ID" and "Apparatus ID". Each record defines a corresponding relationship between one controller and one program module and manages information indicating in which air conditioning apparatus 50a, 50b, 50c, ... of which models belonging to which model group that program module is to be executed.

In the "Controller ID" field of each record, there is stored the ID of the controller corresponding to that record. In the "Module Name" field of each record, there is stored the name of the program module corresponding to that record. In the "Model Group ID" field of each record, there is stored the ID of the model group corresponding to that record. In the "Model ID" field of each record, there is stored the ID of the model corresponding to that record. It will be noted that one program module is uniquely identified by combining the value of the "Model group ID" field and the value of the "Module Name" field of each record. In the "Apparatus ID" field of each record, there is stored the ID of the air conditioning apparatus 50a, 50b, 50c, ... corresponding to that record.

### <Various Types of Registration Processing>

### Flow of Processing When Defining Group of Program Modules

A flow of processing when the operator defines a group of program modules in the remote management server 20 will be described below.

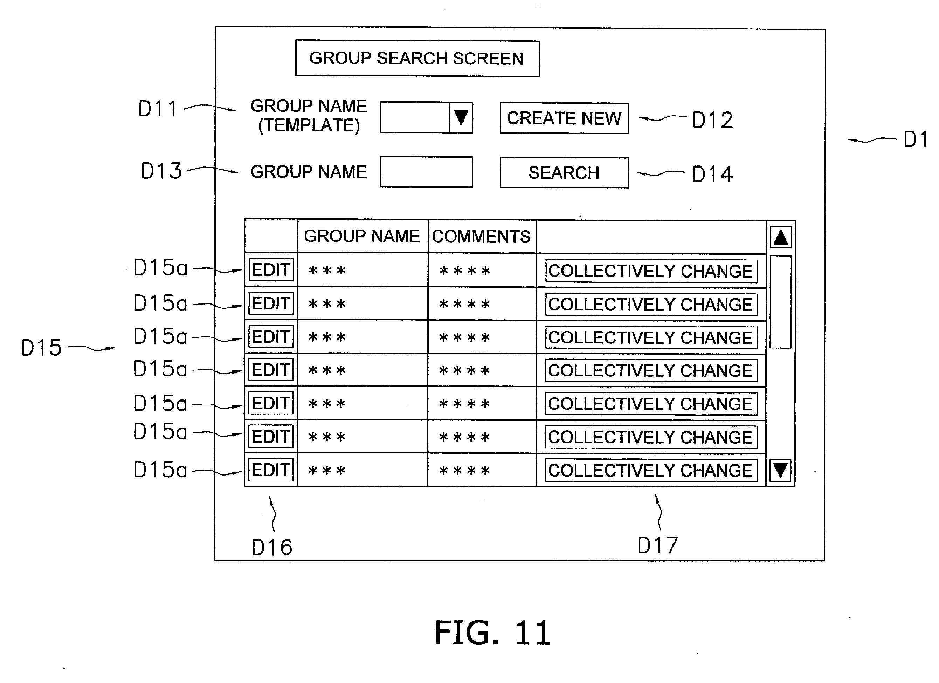

First, the operator operates the input unit 25 including the mouse and the keyboard to display a group search screen D1 (see FIG 11) on the display 24.

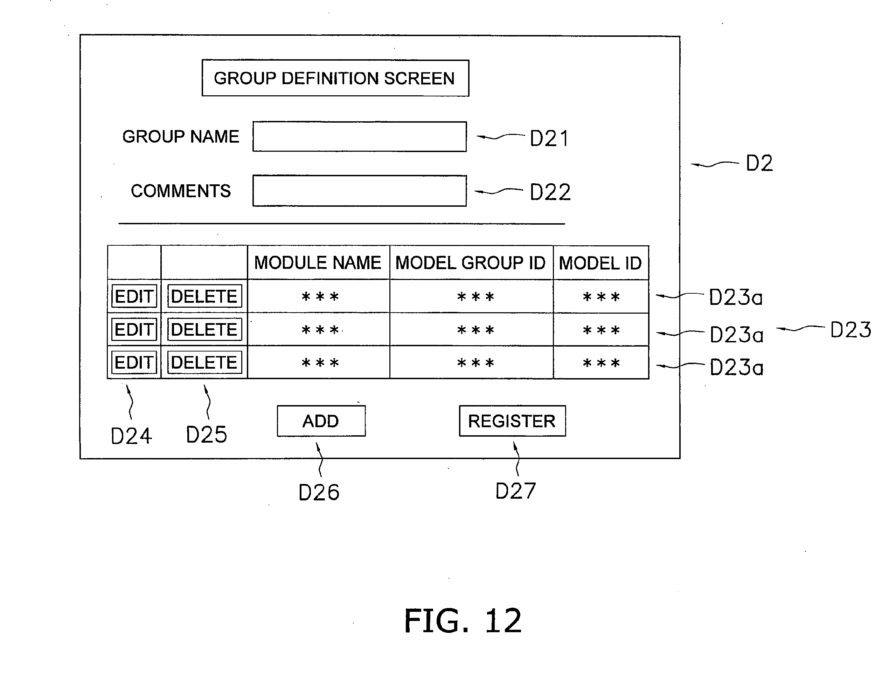

On the group search screen D1, there is disposed a create new button D12. When the create new button D12 is pressed by the operator, the display on the display 24 switches from the group search screen D1 to a group definition screen D2 (see FIG 12). The group definition screen D2 is a screen that is created per group and receives input of setting that correlates one group and one or more program modules from the operator.

Further, on the group search screen D1, there is disposed an input box D11 for inputting the name of a group that becomes a template of a group that the operator wants to newly define. When the create new button D12 is pressed by the operator in a state where the name of a group that becomes a template has been inputted in the input box D11, it becomes possible to define a new group in a work format where the operator may make changes to that group that becomes a template. This function of being able to select a group that becomes a template is a function that is convenient when the group that the operator wants to newly define is one that can be obtained by just making a slight change to a group that has been registered.

The input box D11 is a pull-down box. Additionally, a list of names of groups that are already registered in the remote management server 20 is displayed as a pull-down menu. Consequently, it suffices for the operator to select the name of a group that becomes a template from among the list of the names of the groups that has been displayed. It will be noted that it is also possible to define the contents of a group from scratch rather than selecting a group that becomes a template. In this case, it suffices for the operator to select a blank space from within the pull-down menu in the input box 11.

Turning now to the group definition screen D2, on the group definition screen D2, there are disposed a group name setting box D21, a comment setting box D22 and a module display box D23. The operator can input the name of a group in the group name setting box D21 and can input comments describing that group in the comment setting box D22. Further, in the module display box D23, there are displayed the names and the like of the program modules correlated with that group. The names and the like of one or more program modules correlated with a certain group are determined with reference to the group definition table 22c. The module display box D23 is configured from one or plural rows D23a. Each row D23a corresponds to one record within the group definition table 22c and displays "Module Name", "Model Group ID" and "Model ID" in a transverse direction.

It will be noted that, when the create new button D12 has been pressed in a state where a group that becomes a template has been selected on the group search screen D1, the name of that group that becomes a template, the comments correlated with that group that becomes a template and the names and the like of the program modules correlated with that group that becomes a template are respectively displayed as default values in the group name setting box D21, the comment setting box D22 and the module display box D23 on the group definition screen D2. On the other hand, when the create new button D12 has been pressed without a group that becomes a template being selected on the group search screen D1, blank spaces are respectively displayed as default values in the group name setting box D21, the comment setting box D22 and the module display box D23 on the group definition screen D2.

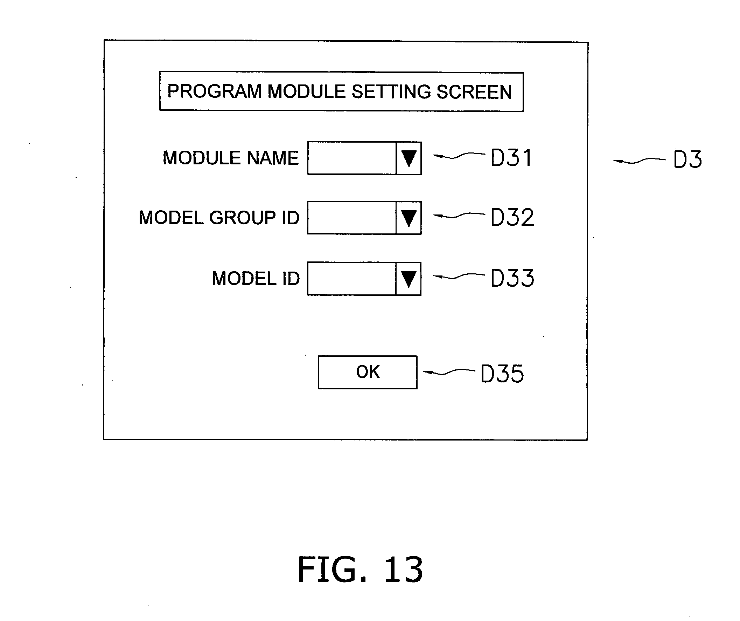

Additionally, when an edit button D24 disposed on the left side of each row D23a is pressed by the operator, a program module setting screen D3 (see FIG. 13) corresponding to that row D23a is displayed on the display 24. The program module setting screen D3 is a screen that receives input of the name and the like of the program module displayed on the group definition screen D2.

On the other hand, when a delete button D25 displayed on the left side of each row 23a is pressed by the operator, that row 23a is erased from the module display box D23.

Further, when the operator has pressed an add button D26, the program module setting screen D3 (see FIG 13) is displayed on the display 24.

On the program module setting screen D3, there are disposed input boxes D31 to D33 for setting "Module Name", "Model Group ID" and "Model ID". It will be noted that when the display 24 has transitioned to the program module setting screen D3 as a result of the add button D26 being pressed, a blank space is displayed as a default value in each input box D31 to D33. On the other hand, when the display 24 has transitioned to the program module setting screen D3 as a result of one of the edit buttons D24 being pressed, values that had been displayed in the row D23a corresponding to that edit button D24 are respectively displayed as default values in the input boxes D31 to D33.

Additionally, when the operator inputs values that are to be eventually selected by making a change to the default values that had been displayed in the input boxes D31 to D33 and presses an OK button D35, the group definition screen D2 (see FIG. 12) is again displayed on the display 24. In the module display box D23 on the group definition screen D2 at this time, there are displayed the values that were inputted on the program module setting screen D3 immediately before.

Moreover, on the group definition screen D2, there is disposed a register button 27. When the register button D27 is pressed by the operator, the control unit 21 detects that. Additionally, the control unit 21 that has detected that the register button D27 has been pressed adds new records within the group listing table 22b and the group definition table 22c or changes the contents of existing records. That is, the control unit 21 causes the contents that had been inputted or displayed on the group definition screen D2 at the time when the register button D27 was pressed to be reflected in one or more record within the group listing table 22b and the group definition table 22c.

Returning now to the group search screen D1, on the group search screen D1 (see FIG. 11), there are disposed a group name input box D13, a search button D14 and a group display box D15. When the search button D14 is pressed by the operator, one or plural rows D15a are displayed in the group display box D15. Rows D15a correspond in a one-to-one ratio to records within the group listing table 22b. In each row D15a, values of "Group Name" and "Comments" fields of the record corresponding to that row D15a are displayed in a state where they are arranged side-by-side. It will be noted that, when the search button D14 has been pressed in a state where the group name input box D13 is blank, the rows D15a corresponding to all of the groups are displayed in the group display box D15. On the other hand, when the search button D14 has been pressed in a state where a character string has been inputted in the group name input box D13, a list of the groups that include that character string in their group names is displayed in the group display box D15.

Additionally, when an edit button D16 disposed on the left side of each row D15a is pressed by the operator, the group definition screen D2 (see FIG. 12) for defining the group corresponding to that row D15a is displayed on the display 24. Thus, the operator can change the registration contents of a group that has been defined. It will be noted that, when the display 24 has transitioned to the group definition screen D2 as a result of one of the edit buttons D16 being pressed on the group search screen D1, the name of the group corresponding to that edit button D16, the comments correlated with the group corresponding to that edit button D16 and the names and the like of the program module(s) correlated with the group corresponding to that edit button D16 are respectively displayed as default values in the group name setting box D21, the comment setting box D22 and the module display box D23.

### Flow of Processing When Correlating Program Module with Controller

Next, a flow of processing when the operator correlates a program module with the controllers 10a, 10b, ... in the remote management server 20 will be described. It will be noted, as the method of correlating a program module with the controllers 10a, 10b, ..., there are a method of indirectly correlating a program module with the controllers 10a, 10b, ... by correlating a group of program modules with the controllers 10a, 10b, ... and a method of directly correlating a program module with the controllers 10a, 10b, ....

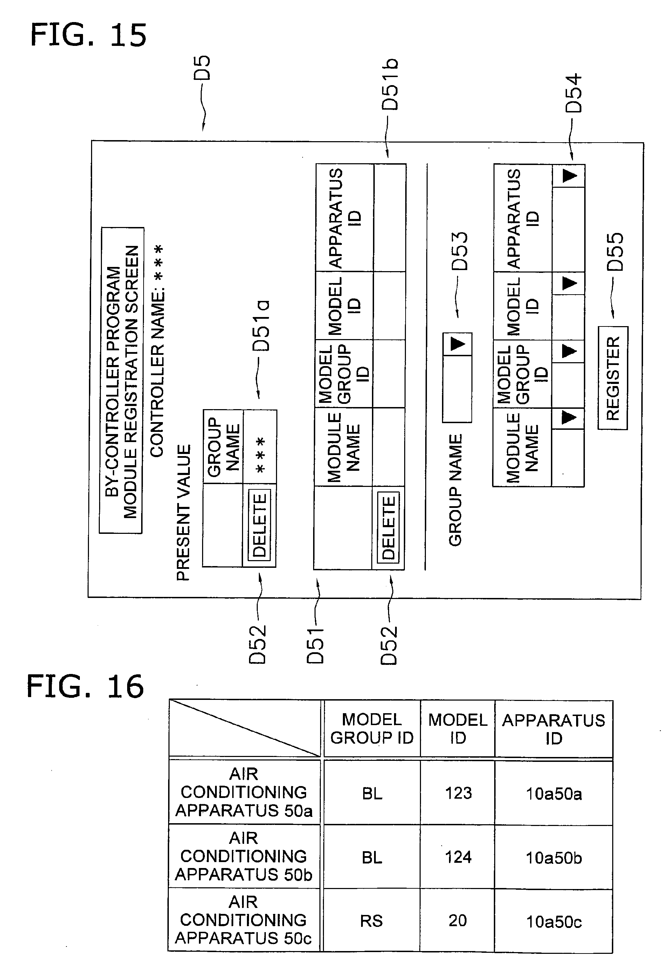

First, the operator operates the input unit 25 including the mouse and the keyboard to display a by-controller program module registration screen D5 (see FIG. 15) on the display 24. The by-controller program module registration screen D5 is a screen that is created per controller 10a, 10b, ....

On the by-controller program module registration screen D5 that corresponds to a certain controller 10a, 10b, ..., there is disposed a present value display box D51 that displays the group of program modules and the program module presently correlated with that controller 10a, 10b, .... The group and the program module presently correlated with the certain controller 10a, 10b, ... are determined with reference to the by-controller group registration table 22d and the by-controller program module registration table 22e.

Further, on the by-controller program module registration screen D5 corresponding to the certain controller 10a, 10b, ..., there is disposed an input box 53 for inputting the name of a group corresponding to that controller 10a, 10b, .... When a register button D55 is pressed in a state where the name of a group has been inputted in the input box 53 by the operator, a row D51a that displays the name of that group is added to the present value display box D51. Further, together with the addition of the one row D51a, one record corresponding to that row D51a is added within the by-controller group registration table 22d. Each row D51a on the present value display box D51 can be erased by pressing a delete button D52 on the left side of that row D51a. At this time, the record corresponding to that row D51a is deleted from within the by-controller group registration table 22d.

It will be noted that the input box D53 is a pull-down box. Additionally, a list of groups that are already registered in the remote management server 20 is displayed as a pull-down menu. Consequently, it suffices for the operator to select the group that the operator wants to correlate with the controller 10a, 10b, ... from among the list of groups that has been displayed.

Further, on the by-controller program module registration screen D5 corresponding to the certain controller 10a, 10b, ..., there is disposed an input box D54 for inputting the name and the like of the program module to be correlated with that controller 10a, 10b, .... When the register button D55 is pressed in a state where "Module Name", "Model Group ID", "Model ID" and "Apparatus ID" have been inputted in the input box D54 by the operator, a row D51b that displays the name and the like of that program module is added to the present value display box D51. Further, together with the addition of the one row D51b, one record corresponding to that row D51b is added within the by-controller program module registration table 22e. Each row D51b on the present value display box D51 can be erased by pressing the delete button D52 on the left side of that row D51b. At this time, the record corresponding to that row D51b is deleted from within the by-controller program module registration table 22e.

### Flow of Processing to Collectively Change by-Controller Registration Contents

The remote management server 20 is equipped with the function of collectively changing, per group, corresponding relationships between the controllers 10a, 10b, ... and the groups of program modules. This function is a function that collectively eliminates, with respect to all or some of the controllers 10a, 10b, ... correlated with the same group, the corresponding relationship with that group and constructs a corresponding relationship with another group.

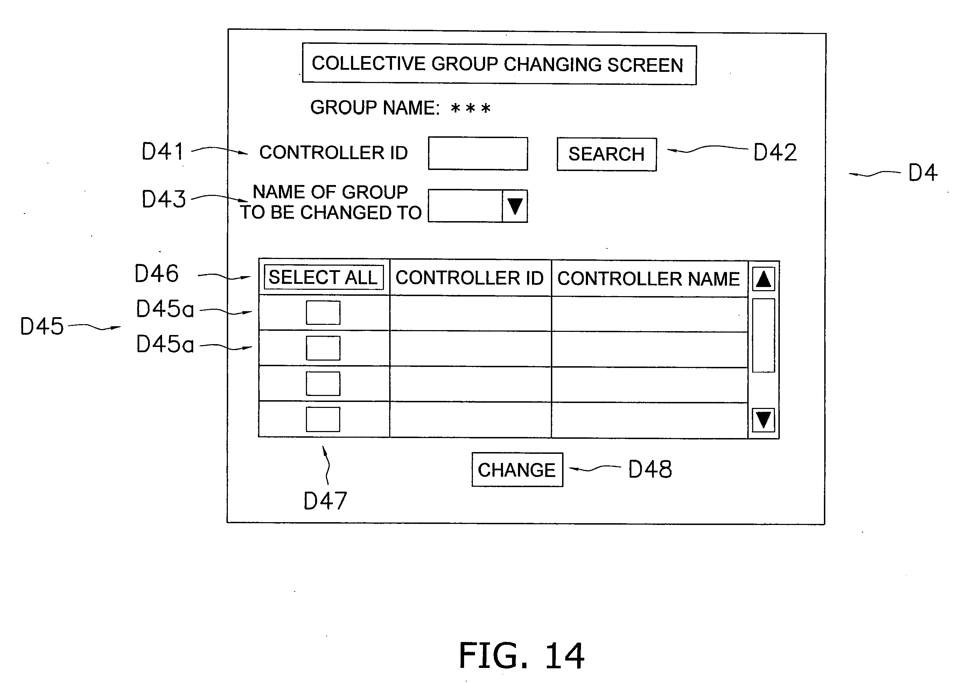

When a collectively change button D17 disposed on the right side of each row D15a on the group search screen D1 is pressed by the operator, a collective group changing screen D4 (see FIG 14) for collectively changing the corresponding relationship between the group corresponding to that row D15a and the controller(s) 10a, 10b, ... is displayed on the display 24.

On the collective group changing screen D4, there are disposed a controller ID input box D41, a search button D42 and a controller display box D45. When the search button D42 is pressed by the operator, one or plural rows D45a are displayed in the controller display box 45. In each row D45a, the ID and the name of the controller 10a, 10b, ... correlated with the group corresponding to that collective group changing screen D4 are displayed one at a time. The corresponding relationship between the group corresponding to that collective group changing screen D4 and the controller(s) 10a, 10b, ... is determined with reference to the by-controller group registration table 22d. It will be noted that, when the search button D42 has been pressed in a state where the controller ID input box D41 is a blank space, the IDs and names of all of the controllers 10a, 10b, ... correlated with the group corresponding to that collective group changing screen D4 are displayed in the controller display box D45. On the other hand, when the search button D42 has been pressed in a state where a character string has been inputted in the controller ID input box, a list of the controllers 10a, 10b, ... that include that character string in their IDs is displayed in the controller display box D45.

Additionally, on the left side of each row D45a of the controller display box D45, there is disposed a check box D47. The operator can input check marks one at a time in each check box D47 and can also input check marks in all of the check boxes D47 by pressing a select all button D46.

A group name input box D43 receives input of a group name to be changed to. The input box D43 is a pull-down box. Additionally, a list of names of groups that are already registered in the remote management server 20 is displayed as a pull-down menu. Consequently, it suffices for the operator to select the name of a group to be changed to from among the list of names of groups that has been displayed.

Additionally, when a change button D48 is pressed by the operator, the contents of the change that had been designated on the collective group changing screen D4 at the time when the change button D48 was pressed are reflected in the by-controller group registration table 22d. More specifically, the control unit 21 extracts, from within the by-controller group registration table 22d, records in whose "Group Name" fields is stored the name of the group corresponding to that collective group changing screen D4 and in whose "Controller ID" fields is stored the ID of the controller 10a, 10b, ... that had been checked by the operator at the time when the change button D48 was pressed. As for whether or not something has been checked by the operator, this is determined depending on whether or not there are check marks inside the check boxes D47. Additionally, the control unit 21 updates the values of the "Group Name" fields of the records it extracted to the group name that had been inputted in the group name input box D43 at the time when the change button D48 was pressed.

### Flow of Processing to Deliver Program Modules

Next, a flow of processing by which the program modules are delivered to the corresponding controllers 10a, 10b, ... from the remote management server 10 will be described.

The timing of the delivery of the program module(s) from the remote management server 20 to each controller 10a, 10b, ... is the time when the daily data are transmitted from that controller 10a, 10b, ... to the remote management server 20. Access to each controller 10a, 10b, ... from the remote management server 20 is prohibited by the existence of the router 30 that has a firewall function. Consequently, at the time of an inquiry from each controller 10a, 10b, ... to the remote management server 20 that is periodically performed once a day, delivery of the program module(s) is performed as a response thereto. In each daily data, there is included information indicating the ID of the controller 10a, 10b, ... that is the source of transmission.

A case where the daily data have been sent from the controller 10a will be taken as an example below to describe the operation of the remote management server 20. It will be noted that the "Model Group ID"s, the "Model ID"s and the "Apparatus ID"s of the air conditioning apparatus 50a, 50b and 50c managed by the controller 10a are as in FIG. 16 and that air conditioning apparatus other than the air conditioning apparatus 50a, 50b and 50c are not connected to the controller 10a. Further, the information shown in FIG. 16 is associated with the ID of the controller 10a and is stored beforehand in the remote management server 20.

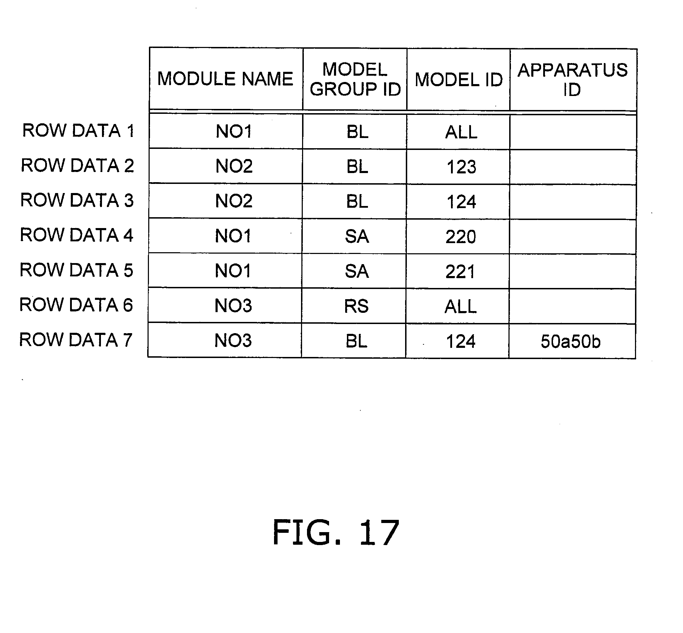

When the control unit 21 of the remote management server 21 receives the daily data from the controller 10a via the Internet communication unit 23, the control unit 21 references the by-controller group registration table 22d and the by-controller program module registration table 22e to derive the name of the group correlated with the controller 10a and the name and the like of the program module. Next, the control unit 21 references the group definition table 22c to derive the names and the like of the program modules belonging to the group it has derived. At this stage, the information shown in FIG 17 is derived. It will be noted that the "ALL" in the "Model ID" box means all model IDs belonging to the corresponding model group ID. Further, the table shown in FIG 17 is configured from seven row data 1 to 7, with row data 1 to 6 being data that have been derived with reference to the by-controller group registration table 22d and the group definition table 22c and with row data 7 derived as far as apparatus ID being data that have been derived with reference to the by-controller program module registration table 22e.

Next, the control unit 21 transmits the program modules designated by the file (hereinafter, index file) storing the information shown in FIG. 17 together with the index file to the controller 10a via the Internet communication unit 23. The program modules transmitted at this time specifically are five program modules specified by (Module Name, Model Group ID) = (NO 1, BL), (NO 2, BL), (NO 1 SA), (NO 3, RS) and (NO 3, BL).

Meanwhile, in the controller 10a, these five program modules and the index file are stored in the storage unit 12. Then, these program modules are executed by the control unit 11 at the timing when the control unit 11 next executes the abnormality detection program. It will be noted that the control unit 11 references the index file, executes the two program modules specified by (Module Name, Model Group ID) = (NO1, BL) and (NO 2, BL) in regard to the air conditioning apparatus 50a, executes the three program modules specified by (Module Name, Model Group ID) = (NO1, BL), (NO 2, BL) and (NO 3, BL) in regard to the air conditioning apparatus 50b and executes the one program module specified by (Module Name, Model Group ID) = (NO 3, RS) in regard to the air conditioning apparatus 50c. The program module specified by (Module Name, Model Group ID) = (NO 1, SA) is not executed. That is, the controller 10a is configured such that it can execute only the program modules required per air conditioning apparatus 50a, 50b and 50c by referencing the index file. *Characteristics*
(1) The remote management server 20 stores the plural program modules each of which is to be executed in at least any of the plural controllers 10a, 10b, .... Additionally, the remote management server 20 receives registration of the program module(s) to be executed in each controller 10a, 10b, ... and provides the program module(s) following the contents of that registration to each controller 10a, 10b, .... The registration of the program modules in the remote management server 20 is performed by the operator defining a group including one or more program modules and correlating the defined group with the controller(s) 10b, 10b, .... Thus, in the remote management server 20, the program modules required in each controller 10a, 10b, ... can be registered easily.
(2) In the remote management server 20, it is possible to define a new group of program modules by using an existing group of program modules as a template. In other words, when the operator defines a new group, it suffices for the operator to input only the difference between the new group and the existing group. Thus, it becomes possible to easily define a group of program modules. In particular, when a new group can be defined by just making a slight change to an existing group, defining the group becomes easier.
(3) In the remote management server 20, the operator can, with respect to all or some of the controllers correlated with a certain group of program modules, collectively eliminate the corresponding relationship with that group and construct a corresponding relationship with another group. Consequently, when a registration change of the same contents becomes necessary in plural controllers correlated with the same group, work by the operator to make that change becomes easy.
   It will be noted that, when new models of air conditioning apparatus are developed and introduced or there arises the need to modify the program modules that are to be executed in the air conditioning apparatus 50a, 50b, 50c, ..., it is easy for the demand to want to collectively change all or some of the controllers correlated with a specific group to arise. The remote management server 20 exhibits that effect particularly in this kind of situation.
(4) In the remote management server 20, the programs can be correlated directly with the controllers 10a, 10b, .... Thus, it becomes possible to consider circumstances per controller 10a, 10b, ...

### Modifications

(1) Devices other than the air conditioning apparatus 50a, 50b, 50c, ... may also be the processing targets of the controllers 10a, 10b, .... For example, the devices that become the processing targets of the controllers 10a, 10b, ... may also be disaster prevention devices, illumination devices, or combinations of plural types of devices including air conditioning apparatus.
(2) The controllers 10a, 10b, ... and the remote management server 20 may also be interconnected via a line other than the Internet line 4. For example, they may also be interconnected by a telephone line.
(3) Each of the screens D1 to D5 may also be displayed on a display of a terminal that is capable of accessing the remote management server 20 via the Internet line 4. In this case, various types of registration in the remote management server 20 can be performed remotely of the remote management server 20.
(4) The program modules that are delivered from the remote management server 20 to the controllers 10a, 10b, ... do not have to pertain to abnormality detection. That is, the present invention can be utilized to deliver various types of program modules.
(5) The controllers 10a, 10b, ... may also be respectively built into the air conditioning systems 40a, 40b, .... That is, the air conditioning systems 40a, 40b, ... may be respectively equipped with the functions of the controllers 10a, 10b, ... and may be connected to the remote management server 20 not via the separate controllers 10a, 10b, ....
(6) In the preceding embodiment, each time the daily data are sent from the controllers 10a, 10b, ... to the remote management server 20, all of the program modules correlated with those controllers 10a, 10b, ... are delivered from the remote management server 20 to those controllers 10a, 10b, ....
   However, it is not necessary to repeatedly deliver program modules that have already been delivered. Thus, for example, a "Delivery Status" field may be disposed in the by-controller group registration table 22d and the by-controller program module registration table 22e. In this "Delivery Status" field, there is stored information indicating the delivery status of the program modules. Additionally, the control unit 21 references this "Delivery Status" field so that, when the control unit 21 receives the daily data from a certain controller 10a, 10b, ..., the control unit 21 determines whether or not each program module correlated with that controller 10a, 10b, ... has been delivered. Then, the control unit 21 refrains from delivering program modules that have been delivered and transmits to the controllers 10a, 10b, ... only program modules that have not yet been delivered.
(7) In the preceding embodiment, the timing of delivery of the program modules from the remote management server 20 to the controllers 10a, 10b, ... was limited to the time when the daily data are transmitted from the controllers 10a, 10b, ... to the remote management server 20.
   However, for example, delivery of the program modules may also be performed at the time of test operation of the controllers 10a, 10b, .... That is, it is possible for delivery of the program modules to be executed at an arbitrary timing when an inquiry is made from the controllers 10a, 10b, ... to the remote management server 20.
(8) In the preceding embodiment, also included within the program modules that are delivered from the remote management server 20 to each controller 10a, 10b, ... are program modules that are not executed in that controller 10a, 10b, ....
   Thus, in the remote management server 20, the control unit 21 may also have the function of referencing the by-controller group registration table 22d, the group definition table 22c and the by-controller program module registration table 22e and specifying the program modules that are to be executed in each controller 10a, 10b ... that is the destination of transmission. Then, only the program modules that have been specified by the control unit 21 are transmitted from the Internet communication unit 23 to that controller 10a, 10b, ....
   In this modification, there can be provided to each controller 10a, 10b, ... only the program module(s) to be executed in that controller 10a, 10b, .... Thus, the communication burden is controlled without extra program modules being transmitted.

### INDUSTRIAL APPLICABILITY

The present invention is useful as a remote management device that manages, remotely of plural controllers that respectively control devices, the plural controllers and as a remote management system that is equipped with the remote management device, and the present invention has the effect that it can easily register one or more programs required in each controller in the remote management device.

## Claims

1. A remote management device (20) that manages, remotely of plural controllers (10a, 10b, ...) that respectively control devices (40a, 40b, ...), the plural controllers, the remote management device (20) comprising:
a program storage unit (22a) configured to store plural programs to be executed in the controllers;
a group definition information registration unit (21, 22c, D1 to D3) configured to receive registration of group definition information defining a group whose element is one or more programs of the plural programs;
a first management information registration unit (21, 22d, D5) configured to receive registration of first management information correlating at least one of the plural controllers and the group; and
a communication unit (23) configured to transmit the programs to be executed in the controllers to the corresponding controllers.

2. The remote management device (20) according to claim 1, wherein the group definition information registration unit (21, 22c, D1 to D3) is configured to receive registration of plural sets of the group definition information including first group definition information defining a first group whose element is one or more programs of the plural programs and second group definition information defining a second group that differs from the first group and whose element is one or more programs of the plural programs.

3. The remote management device (20) according to claim 2, wherein the group definition information registration unit (21, 22c, D1 to D3) is configured to display the first group definition information, receive input of a change with respect to the first group definition information that has been displayed, and register, as the second group definition information, information where the change that has been inputted is reflected in the first group definition information.

4. The remote management device (20) according to claim 2 or 3, further comprising a registration changing unit (21, 22d, D4) configured to collectively display all or a part of the controllers (10a, 10b, ...) correlated by the first management information with the first group, receive selection of all or a part of the controllers that have been collectively displayed, and change the first management information so as to correlate the controllers that have been selected with the second group.

5. The remote management device (20) according to any of claims 1 to 4, further comprising a second management information registration unit (21, 22e, D5) configured to receive registration of second management information correlating the controllers (10a, 10b, ...) and the programs.

6. The remote management device (20) according to any of claims 1 to 5, wherein the group definition information is information correlating program identification information that identifies the programs belonging to the group and group identification information that identifies the group.

7. The remote management device (20) according to any of claims 1 to 6, wherein the communication unit (23) is configured to transmit, to each of the controllers, together with a program group including the program to be executed in that controller (10a, 10b, ...), the group definition information defining the group correlated by the first management information with that controller.

8. The remote management device (20) according to any of claims 1 to 6, further comprising a specifying unit (21) configured to reference the first management information and the group definition information and specify the program to be executed in each of the controllers (10a, 10b, ...) from among the plural programs, wherein the communication unit (23) is configured to transmit, to each of the controllers, only the program of the plural programs that has been specified by the specifying unit.

9. The remote management device (20) according to any of claims 1 to 8, wherein the controllers (10a, 10b, ...) are built into the devices (40a, 40b, ...).

10. A remote management system (100) comprising:
plural controllers (10a, 10b, ...) configured to respectively control devices (40a, 40b, ...); and
a remote management device (20) configured to manage the plural controllers remotely of the plural controllers,
wherein
the remote management device includes
a program storage unit (22a) configured to store plural programs to be executed in the plural controllers (10a, 10b, ...),
a group definition information registration unit (21, 22c, D1 to D3) configured to receive registration of group definition information defining a group whose element is one or more programs of the plural programs,
a first management information registration unit (21, 22d, D4) configured to receive registration of first management information correlating at least one of the controllers and the group, and
a remote side communication unit (23) configured to transmit the programs to be executed in the controllers to the corresponding controllers, and
the controllers include
controller side communication units (13) configured to receive the programs that have been transmitted from the remote side communication unit and
program execution unit (11) configured to execute the programs that have been received by the controller side communication units.
